# EUROPÄISCHE PATENTSCHRIFT

(11) **EP 2 799 152 B1**
(45) Veröffentlichungstag und Bekanntmachung des Hinweises auf die Patenterteilung: **23.12.2015**
(21) Anmeldenummer: 14163291.9
(22) Anmeldetag: 03.04.2014
(51) Int. Cl.: B05B 13/06, B05B 15/04, C23C 4/16, B05B 7/20

(54) **Bearbeitungsvorrichtung zur Bearbeitung einer Werkstückoberfläche**
Processing device for processing a workpiece surface
Dispositif de traitement destiné à traiter une surface de pièce

(30) Priorität: 03.05.2013 EP 13166353
(43) Veröffentlichungstag der Anmeldung: 05.11.2014
(73) Patentinhaber: Sulzer Metco AG, 5610 Wohlen (CH)
(72) Erfinder: Bohnheio, Christian, 5506 Mägenwil (CH)
(74) Vertreter: Intellectual Property Services GmbH

(56) Entgegenhaltungen:
- DE-A1- 19 934 991
- DE-B3-102008 016 040
- US-A- 3 778 292

## Beschreibung

Die Erfindung betrifft eine Bearbeitungsvorrichtung zur Bearbeitung einer Werkstückoberfläche nach dem Oberbegriff des Anspruchs 1 und ein Verfahren nach dem Oberbegriff des Anspruchs 12.

Aus der DE 10 2008 016 040 B3 ist bereits eine Bearbeitungsvorrichtung zur Innenbeschichtung von Zylinderbohrungen, mit einer Abschirmeinheit, die dazu vorgesehen ist, einen zur Bearbeitung vorgesehenen Teilbereich einer Werkstückoberfläche und einen benachbart angeordneten Teilbereich der Werkstückoberfläche zumindest während eines Betriebs voneinander zu trennen, bekannt.

Der Erfindung liegt insbesondere die Aufgabe zugrunde, eine einfache, flexibel einsetzbare Bearbeitungsvorrichtung zur Bearbeitung einer Werkstückoberfläche sowie ein entsprechendes Verfahren bereitzustellen. Sie wird durch eine erfindungsgemäße Bearbeitungsvorrichtung entsprechend dem Anspruch 1 und ein Verfahren entsprechend dem Anspruch 12 gelöst. Weiterbildungen der Erfindung ergeben sich aus den abhängigen Ansprüchen.

Die Erfindung geht aus von einer Bearbeitungsvorrichtung zur Bearbeitung einer Werkstückoberfläche in Form einer Innenbeschichtung von mehreren in Reihe angeordneten Zylinderbohrungen, mit einer Abschirmeinheit, die dazu vorgesehen ist, einen zur Bearbeitung vorgesehenen Teilbereich der Werkstückoberfläche und einen benachbart angeordneten Teilbereich der Werkstückoberfläche zumindest während eines Betriebs voneinander zu trennen.

Es wird vorgeschlagen, dass die Abschirmeinheit wenigstens eine Absperrdüse aufweist, die dazu vorgesehen ist, eine Fluidströmung zur Trennung der zumindest zwei Teilbereiche zu erzeugen. Die Absperrdüse ist dabei so positioniert, dass die Fluidströmung entlang der Werkstückoberfläche strömt und die Absperrdüse auf einen Teilbereich zwischen zwei Zylinderbohrungen gerichtet ist. Dadurch kann eine sichere Trennung der beiden Teilbereiche erreicht werden, ohne dass eine Verblendung oder ähnliches verwendet werden muss, welche einen Verschleiß aufweist oder zumindest zeitweise gereinigt werden muss. Zudem kann auf eine mechanische Trennung verzichtet werden, wodurch die Abschirmeinheit für unterschiedliche Werkstücke eingesetzt werden kann, ohne dass verschiedene Abschirmvorrichtungen vorgehalten werden müssen. Durch eine erfindungsgemäße Ausgestaltung kann somit eine einfache, flexibel einsetzbare Bearbeitungsvorrichtung bereitgestellt werden. Unter einer "Trennung während eines Betriebs" soll dabei insbesondere verstanden werden, dass lediglich einer der Teilbereiche der Werkstückoberfläche einer Bearbeitung ausgesetzt ist, während der zweite Teilbereich, der ohne die Abschirmeinheit einer Bearbeitung ausgesetzt wäre, unbearbeitet bleibt. Unter einer "Fluidströmung" soll dabei insbesondere eine Gasströmung verstanden werden. Unter einer Fluidströmung zur Trennung der Teilbereiche soll insbesondere eine Gasströmung verstanden werden, die verhindert, dass der benachbart angeordnete Teilbereich, der nicht zur Bearbeitung vorgesehen ist, frei von einer Bearbeitung bleibt. Die Bearbeitungsvorrichtung ist dabei insbesondere für eine kontaktlose Bearbeitung der Werkstückoberfläche vorgesehen, wie beispielsweise eine Plasmabeschichtung oder ähnliches. Unter einer Trennung soll dabei insbesondere nicht eine mechanische Trennung der Teilbereiche verstanden werden.

Weiter wird vorgeschlagen, dass die mittels der Absperrdüse erzeugbare Fluidströmung zumindest zum Teil dazu vorgesehen ist, entlang der Werkstückoberfläche gerichtet zu werden. Dadurch kann erreicht werden, dass die Fluidströmung entlang der Werkstückoberfläche strömt, womit die Fluidströmung analog zu einer mechanischen Sperre, die auf die Werkstückoberfläche aufgesetzt wird, wirken kann. Dadurch können die Teilbereiche besonders effektiv voneinander getrennt werden. Unter "zumindest zum Teil entlang der Werkstückoberfläche gerichtet" soll dabei insbesondere verstanden werden, dass die Fluidströmung in einem Betrieb in zumindest einem Teilbereich eine Strömungsrichtung aufweist, die zumindest im Wesentlichen parallel zu einer Haupterstreckungsrichtung der Werkstückoberfläche gerichtet ist. Unter einer "Strömungsrichtung in einem Teilbereich" soll dabei insbesondere eine mittlere Strömungsrichtung von einem Teil der Fluidströmung verstanden werden. Vorzugsweise weist die Fluidströmung insgesamt eine mittlere Strömungsrichtung auf, die entlang der Werkstückoberfläche gerichtet ist. Unter "zumindest im Wesentlichen parallel" soll dabei insbesondere verstanden werden, dass die mittlere Strömungsrichtung und die Werkstückoberfläche einen Winkel von 180 Grad ± 90 Grad aufweisen. Unter einer "mittleren Strömungsrichtung" soll dabei insbesondere eine mittlere Strömungsrichtung der Fluidströmung unmittelbar nach der Absperrdüse in einem ungestörten Zustand verstanden werden.

Vorzugsweise ist die zumindest eine Absperrdüse als eine Druckluftdüse ausgebildet. Dadurch kann die Abschirmeinheit besonders einfach mit einem Fluid versorgt werden. Grundsätzlich können aber auch andere Fluide, insbesondere andere Gase, zum Betrieb der Absperrdüse verwendet werden.

Besonders vorteilhaft ist die Absperrdüse dazu vorgesehen, einen Flachstrahl zu erzeugen. Dadurch kann eine besonders vorteilhafte Abschirmung erreicht werden. Grundsätzlich kann die Absperrdüse aber auch zur Erzeugung eines Rundstrahl oder einer anderen Strahlform vorgesehen sein. Unter einem "Flachstrahl" oder einem "Rundstrahl" soll dabei insbesondere eine Form der Fluidströmung verstanden werden, die dazu vorgesehen ist, unabhängig von einer mechanischen Trennung die Teilbereiche voneinander zu trennen.

Alternativ kann die Absperrdüse auch dazu vorgesehen sein, ein Druckluftpolster zu erzeugen. Dadurch kann ebenfalls eine gute Abschirmung erreicht werden. Unter einem "Druckluftpolster" soll dabei im Unterschied zu einem Flachstrahl oder Rundstrahl insbesondere eine Form der Fluidströmung verstanden werden, die dazu vorgesehen ist, in einem Bereich vor der Absperrdüse das Druckluftpolster zu erzeugen, wodurch die Absperrdüse zusätzlich zur Trennung durch den Fluidstrahl eine mechanische Trennung bereitstellen kann.

Weiter wird vorgeschlagen, dass die Bearbeitungsvorrichtung einen Brenner zur Bearbeitung der Werkstückoberfläche aufweist. Durch Verwendung einer Abschirmvorrichtung mit einer Absperrdüse in Verbindung mit einem Brenner kann eine besonders einfache, kostengünstige Bearbeitungsvorrichtung zur Veredelung von Werkstückoberflächen bereitgestellt werden. Unter einem "Brenner" soll dabei insbesondere eine Einheit zur Veredelung einer Werkstückoberfläche unter Temperatureinwirkung verstanden werden, wie beispielsweise eine Einheit zur Plasmabeschichtung oder ähnliches.

Vorzugsweise ist die mittels der zumindest einen Absperrdüse erzeugbare Fluidströmung zur Umlenkung eines Brennstrahls des Brenners vorgesehen. Dadurch kann der Brennstrahl des Brenners einfach von dem Teilbereich, der benachbart zu dem zur Bearbeitung vorgesehenen Teilbereich angeordnet ist, abgelenkt werden, wodurch die Teilbereiche in Bezug auf eine Bearbeitung durch den Brenner einfach voneinander getrennt werden können.

Besonders vorteilhaft sind die Absperrdüse und der Brenner in einem Winkel zwischen 80 Grad und 150 Grad zueinander angeordnet. Dadurch kann der Brennstrahl mit einer hohen Zuverlässigkeit abgelenkt werden. Unter einem "Winkel zwischen der Absperrdüse und dem Brenner" soll dabei insbesondere ein Winkel zwischen einer Hauptausstoßrichtung der Absperrdüse und einer Abstrahlrichtung des Brenners verstanden werden. Unter einer "Abstrahlrichtung" soll dabei insbesondere eine mittlere Strömungsrichtung des Brennstrahls unmittelbar nach dem Brenner verstanden werden.

Alternativ können die Absperrdüse und der Brenner aber auch in einem Winkel von ca. 180 Grad zueinander angeordnet sein. Eine solche Ausgestaltung ist insbesondere vorteilhaft, wenn die Absperrdüse dazu vorgesehen ist, ein Druckpolster zu erzeugen. Unter "ca." soll dabei insbesondere eine Abweichung von höchstens 10 Grad, vorteilhaft von höchstens 5 Grad, verstanden werden.

Zudem wird vorgeschlagen, dass die zumindest eine Absperrdüse relativ zu dem Brenner positionierbar ist. Dadurch kann die Absperrdüse unabhängig von dem Brenner positioniert werden, wodurch Zylindergehäuse unterschiedlicher Bauart bearbeitet werden können.

Weiter wird vorgeschlagen, dass die Bearbeitungsvorrichtung eine zweite Absperrdüse aufweist, die dazu vorgesehen ist, in Bezug auf den Brenner gegenüber der ersten Absperrdüse angeordnet zu werden. Dadurch kann eine beidseitige Abschirmung erreicht werden, wodurch ein Teilbereich, der zur Bearbeitung vorgesehen ist, von mehreren Teilbereichen, die benachbart angeordnet sind, abgegrenzt werden kann. Vorzugsweise sind die Absperrdüsen unabhängig voneinander positionierbar.

Zudem ist es vorteilhaft, wenn die Bearbeitungsvorrichtung eine Lagereinheit für den Brenner aufweist, die eine Lagerachse aufweist, die zumindest im Wesentlichen senkrecht zu einer Hauptausstoßrichtung der zumindest einen Absperrdüse gerichtet ist. Dadurch können insbesondere Innenwandungen von Zylinderbohrungen bearbeitet werden, ohne dass gleichzeitig die Innenwandungen benachbarter Zylinderbohrungen verunreinigt werden.

Außerdem wird vorgeschlagen, dass die Bearbeitungsvorrichtung eine Steuereinheit zur Ansteuerung der zumindest einen Absperrdüse aufweist, die dazu vorgesehen ist, die Absperrdüse in Abhängigkeit von einer Ausrichtung und/oder Position des Brenners zu aktivieren und/oder zu deaktivieren. Dadurch kann eine bedarfsgerechte Aktivierung des Absperrstrahls erreicht werden, wodurch ein Verbrauch von Fluid zum Betrieb der Abschirmeinheit gesenkt werden kann. Unter "in Abhängigkeit von einer Ausrichtung und/oder einer Position des Brenners" soll dabei insbesondere verstanden werden, dass die Steuereinheit dazu vorgesehen ist, eine winkelabhängige Ausrichtung des Brenners in Bezug auf die Drehachse des Brenners und/oder eine axial Position des Brenners entlang einer Längserstreckungsrichtung der Zylinderbohrung zu bestimmen und in Abhängigkeit der winkelabhängigen Ausrichtung und/oder axialen Position des Brenners die Absperrdüse einzuschalten und/oder abzuschalten.

Erfindungsgemäße wird außerdem ein Verfahren zur Bearbeitung einer Werkstückoberfläche, insbesondere zur Innenbeschichtung von Zylinderbohrungen, vorgeschlagen, bei dem ein zur Bearbeitung vorgesehener Teilbereich der Werkstückoberfläche und einen benachbart angeordneter Teilbereich der Werkstückoberfläche zumindest während eines Betriebs voneinander getrennt werden, wobei mittels wenigstens einer Absperrdüse eine Fluidströmung zur Trennung der zumindest zwei Teilbereiche erzeugt wird, wodurch eine Werkstückoberfläche besonders einfach bearbeitet werden kann und das Verfahren flexibel einsetzbar ist.

Weitere Vorteile ergeben sich aus der folgenden Figurenbeschreibung. In den Figuren sind zwei Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Dabei zeigen:

- Fig. 1: eine schematische Darstellung einer Bearbeitungsvorrichtung mit einer Abschirmeinheit,
- Fig. 2: eine perspektivische Darstellung eines als Kurbelwellengehäuse ausgebildeten Werkstücks mit einer Absperrdüse,
- Fig. 3: eine weitere Ausgestaltung einer Bearbeitungsvorrichtung mit einer Abschirmeinheit in einer Seitenansicht und
- Fig. 4: die Bearbeitungsvorrichtung aus Fig. 3 in einer perspektivischen Darstellung.

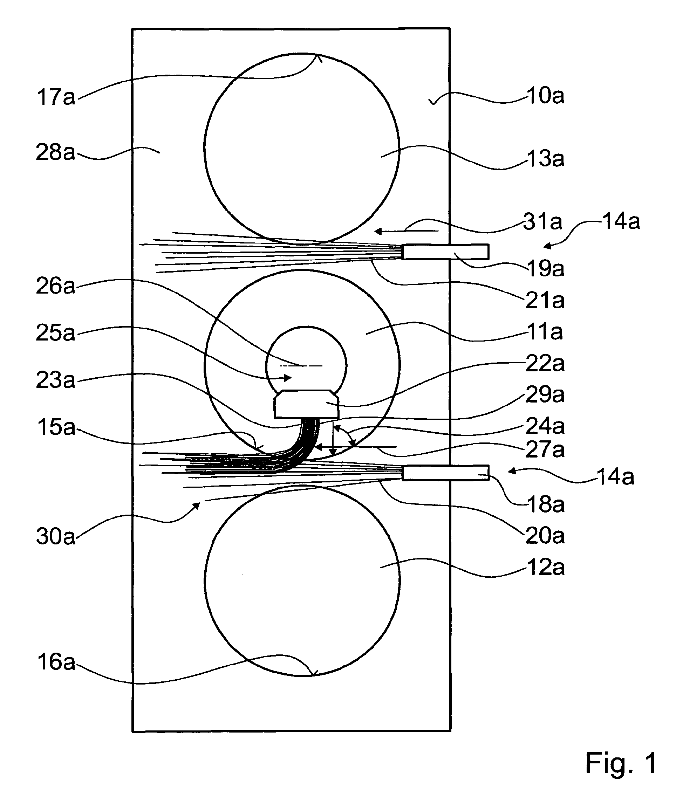

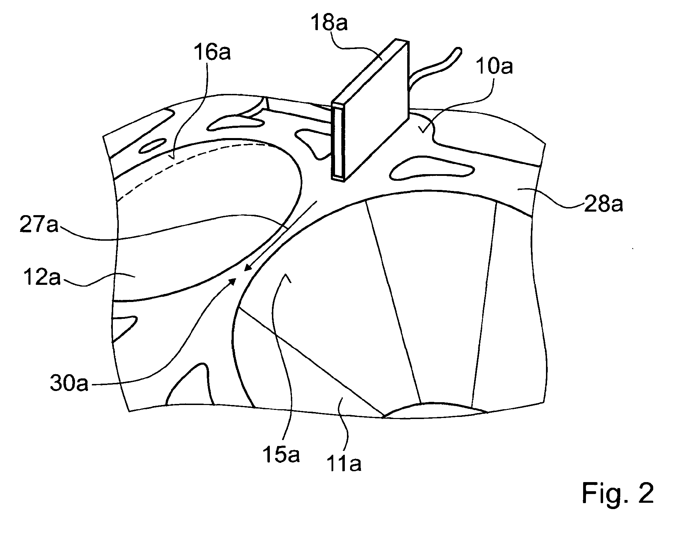

Die Figuren 1 und 2 zeigen eine Bearbeitungsvorrichtung zur Bearbeitung eines Werkstücks 28a. Die Bearbeitungsvorrichtung wird vorzugsweise zur Nachbearbeitung von Zylinderbohrungen 11a, 12a, 13a bzw. von Brennkammern in einem Zylindergehäuse, insbesondere einem Kurbelwellengehäuse von Brennkraftmaschinen für Kraftfahrzeuge, verwendet. Die Bearbeitungsvorrichtung ist insbesondere zur Innenbeschichtung der Zylinderbohrungen 11a, 12a, 13a bzw. Brennkammern vorgesehen. Beispielsweise können mittels der Bearbeitungsvorrichtung Innenwandungen der Zylinderbohrungen 11a, 12a, 13a mit einer Beschichtung versehen werden oder eine Oberflächenstruktur der Innenwandung verändert werden. Grundsätzlich kann die Bearbeitungsvorrichtung aber auch zur Bearbeitung anderer Hohlräume verwendet werden.

Die Zylindergehäuse, wie sie mit der Bearbeitungsvorrichtung bearbeitet werden können, weisen typischerweise mehrere Zylinderbohrungen 11a, 12a, 13a auf, die in Reihe angeordnet sind. Die Bearbeitungsvorrichtung ist dazu vorgesehen, die Zylinderbohrungen 11a, 12a, 13a sukzessive nacheinander zu bearbeiten, d.h. es wird immer lediglich eine der Zylinderbohrungen 11a, 12a, 13a bearbeitet. Zur Bearbeitung des Werkstücks 28a umfasst die Bearbeitungsvorrichtung einen Brenner 22a, der dazu vorgesehen ist, gegen eine Werkstückoberfläche 10a des Werkstücks 28a gerichtet zu werden. Der Brenner 22a umfasst eine Düse, die dazu vorgesehen ist, einen Brennstrahl 23a zu erzeugen, der in einem Betrieb gegen die Innenwandung der entsprechenden Zylinderbohrung 11a, 12a, 13a gerichtet ist. Der Brenner 22a weist eine Abstrahlrichtung 29a auf, die in einem Betrieb senkrecht zu einer Längserstreckungsrichtung der entsprechenden Zylinderbohrung 11a, 12a, 13a ausgerichtet ist. In einem Betrieb wird der Brenner 22a entlang der Längserstreckungsrichtung in die zu bearbeitende Zylinderbohrung 11a, 12a, 13a eingeführt und gegen die Innenwandung der Zylinderbohrung 11a, 12a, 13a gerichtet. Die Innenwandung der entsprechenden Zylinderbohrung 11a, 12a, 13a bildet in einem solchen Fall einen Teilbereich 15a der Werkstückoberfläche 10a des Werkstücks 28a aus, die für eine Bearbeitung mittels des Brenners 22a vorgesehen ist.

Konstruktionsbedingt weist der von dem Brenner 22a erzeugte Brennstrahl 23a eine Aufweitung auf, die insbesondere bei der Bearbeitung von Randbereichen der Zylinderbohrungen 11a, 12a, 13a dazu führt, dass der Brennstrahl 23a auch auf Teilbereiche 16a, 17a der Werkstückoberfläche 10a treffen kann, die benachbart zu dem für die Bearbeitung vorgesehenen Teilbereich 15a angeordnet sind. Um den zur Bearbeitung vorgesehenen Teilbereich 15a und die benachbarten Teilbereiche 16a, 17a während eines Betriebs voneinander zu trennen, weist die Bearbeitungsvorrichtung eine Abschirmeinheit 14a auf. Die Abschirmeinheit 14a ist dabei insbesondere dazu vorgesehen, die Teilbereiche 16a, 17a, die benachbart zu dem zur Bearbeitung vorgesehenen Teilbereich 15a angeordnet sind, vor dem Brenner 22a abzuschirmen.

Zur Abschirmung des Teilbereichs 16a weist die Abschirmeinheit 14a eine Absperrdüse 18a auf, die dazu vorgesehen ist, eine Fluidströmung 20a zur Trennung der Teilbereiche 15a, 16a zu erzeugen. Die Absperrdüse 18a ist dabei insbesondere dazu vorgesehen, eine Fluidströmung 20a zu erzeugen, die in einem Teilbereich 30a, der räumlich zwischen den zwei zu trennenden Teilbereichen 15a, 16a angeordnet ist, entlang der Werkstückoberfläche 10a gerichtet ist (vgl. Figur 2). Die von der Absperrdüse 18a erzeugte Fluidströmung 20a weist eine Aufweitung auf, durch die die Fluidströmung 20a zumindest teilweise auch gegen die Werkstückoberfläche 10a gerichtet ist. Die Fluidströmung 20a bildet damit eine Barriere aus, die sich an die Werkstückoberfläche 10a anpasst. Durch die Fluidströmung 20a werden die Teilbereiche 15a, 16a der Werkstückoberfläche 10a bearbeitungstechnisch voneinander getrennt.

Die Absperrdüse 18a ist als eine Druckluftdüse ausgebildet. Als ein Fluid zur Erzeugung der Fluidströmung 20a wird der Absperrdüse 18a Druckluft zugeführt, beispielsweise über einen Kompresser. Alternativ kann die Absperrdüse 18a aber auch mit anderen Betriebsmitteln betrieben werden, mittels denen ein Fluidstrahl erzeugt werden kann, wie beispielsweise mit Stickstoff oder mit anderen Gasen. Die Absperrdüse 18a ist vorzugsweise dazu vorgesehen, einen Flachstrahl zu erzeugen. Der Flachstrahl bildet die strömungstechnische Barriere aus, mittels der die Teilbereiche 15a, 16a der Werkstückoberfläche 10a in einem Betrieb voneinander getrennt werden. Grundsätzlich kann die Absperrdüse 18a aber auch eine andere Ausgestaltung aufweisen.

Die mittels der Absperrdüse 18a erzeugbare Fluidströmung 20a ist dazu vorgesehen, den Brennstrahl 23a des Brenners 22a umzulenken. Die Fluidströmung 20a weist in einem Betrieb eine Stärke auf, die für den Brennstrahl 23a zumindest im Wesentlichen undurchdringbar ist. Die Fluidströmung 20a und der Brennstrahl 23a sind in einem Winkel 24a ungleich 180 Grad zueinander ausgerichtet. Der Winkel 24a, in dem der Brenner 22a und die Absperrdüse 18a zueinander angeordnet sind, liegt idealerweise zwischen 90 Grad und 135 Grad, kann grundsätzlich aber auch kleiner als 90 Grad oder größer als 135 Grad sein. In dem dargestellten Ausführungsbeispiel beträgt der Winkel 90 Grad. Die Absperrdüse 18a weist dabei eine Hauptausstoßrichtung 27a auf, die mit der Abstrahlrichtung 29a des Brenners 22a den Winkel 24a von ca. 90 Grad einschließt.

Die Absperrdüse 18a ist relativ zu dem Brenner 22a positionierbar. In einem Betrieb wird die Absperrdüse 18a so positioniert, dass die Fluidströmung 20a entlang der Werkstückoberfläche 10a strömt. Bei einem Zylindergehäuse mit mehreren in Reihe angeordneten Zylinderbohrungen 11a, 12a, 13a wird die Absperrdüse 18a auf den Teilbereich 30a zwischen den zwei Zylinderbohrungen 11a, 12a gerichtet. Die Fluidströmung 20a trennt damit die zwei Zylinderbohrungen 11a, 12a bearbeitungstechnisch voneinander. Die Fluidströmung 20a bewirkt, dass der Brennstrahl 23a des Brenners 22a lediglich auf die Innenwandung der einen Zylinderbohrung 11a trifft, und abgelenkt wird, bevor er auf die Innenwandung der anderen Zylinderbohrung 12a trifft.

Um auch die Innenwandung der dritten Zylinderbohrung 13a von der Innenwandung der Zylinderbohrung 11a, die für die Bearbeitung vorgesehen ist, zu trennen, umfasst die Abschirmeinheit 14a eine zweite Absperrdüse 19a. Die weitere Absperrdüse 19a ist analog zu der ersten Absperrdüse 18a ausgebildet. Die Absperrdüse 19a ist ebenfalls dazu vorgesehen, eine Fluidströmung 21 a zu erzeugen, die entlang der Werkstückoberfläche 10a des als Zylindergehäuse ausgebildeten Werkstücks 28a gerichtet ist. In Bezug auf den Brenner 22a ist die zweite Absperrdüse 19a gegenüber der ersten Absperrdüse 18a angeordnet.

Die beiden Absperrdüsen 18a, 19a sind parallel zueinander ausgerichtet. In einem Betrieb strömen die von der ersten Absperrdüse 18a erzeugte Fluidströmung 20a und die von der zweiten Absperrdüse 19a erzeugte Fluidströmung 21 a im Wesentlichen parallel zueinander. Ein Abstand zwischen den beiden Fluidströmungen 20a, 21 a entspricht in etwa einem Durchmesser, den die zur Bearbeitung vorgesehene Zylinderbohrung 11 a aufweist. Der Brenner 22a ist in einem Betrieb zwischen den beiden Fluidströmungen 20a, 21 a, die von den Absperrdüsen 18a, 19a erzeugt werden, angeordnet.

Zur Führung des Brenners 22a umfasst die Bearbeitungsvorrichtung eine Lagereinheit 25a, die den Brenner 22a drehbar lagert. Die Lagereinheit 25a weist eine Lagerachse 26a auf, um die der Brenner 22a in einem Betrieb mit einer definierten Drehzahl rotiert. Durch die Drehung des Brenners 22a wird die gesamte Innenwandung der entsprechenden Zylinderbohrung 11a bearbeitet. Die Lagerachse 26a für den Brenner 22a ist senkrecht zu den Hauptausstoßrichtungen 27a, 31 a der Absperrdüsen 18a, 19a und parallel zu einer Längserstreckung der Zylinderbohrung 11a orientiert.

Die Absperrdüsen 18a, 19a der Abschirmeinheit 14a weisen jeweils ein Ventil auf, mittels dessen die Absperrdüsen 18a, 19a einzeln angesteuert werden können. Zur Ansteuerung der Absperrdüsen 18a, 19a weist die Bearbeitungsvorrichtung eine nicht näher dargestellte Steuereinheit auf.

Die Steuereinheit ist dazu vorgesehen, die Absperrdüsen 18a, 19a in Abhängigkeit von einer Position und einer Ausrichtung des Brenners 22a anzusteuern. Die Steuereinheit aktiviert die Absperrdüsen 18a, 19a lediglich dann, wenn der Brennstrahl 23a auf die benachbart angeordneten Teilbereiche 16a, 17a treffen kann, und deaktiviert die Absperrdüsen 18a, 19a, wenn der Brennstrahl 23a lediglich auf den zur Bearbeitung vorgesehenen Teilbereich 15a der Werkstückoberfläche 10a trifft.

Eine primäre Steuergröße für die Absperrdüse 18a, 19a bildet die axiale Position der Brenners 22a entlang der Längserstreckungsrichtung der Zylinderbohrung 11a aus. Insbesondere wenn der Brenner 22a tief in die Zylinderbohrung 11a eingetaucht ist, trifft der Brennstrahl 23a vollständig auf die Innenwandung der Zylinderbohrung 11a, womit lediglich der zur Bearbeitung vorgesehene Teilbereich 15a dem Brennstrahl 23a ausgesetzt ist. Ein Wert für axiale Positionen, bei denen die Steuereinheit die Absperrdüsen 18a, 19a deaktiviert, ist in der Steuereinheit hinterlegt.

Eine weitere Steuergröße für die Absperrdüsen 18a, 19a bildet die winkelabhängige Ausrichtung des Brenners 22a in Bezug auf die Lagerachse 26b der Lagereinheit 25a aus. Die Steuereinheit, die gleichzeitig zur Ansteuerung eines Antriebs für den Brenner 22a vorgesehen ist, umfasst einen Drehzahlgeber, der dazu vorgesehen ist, eine Drehzahl des Brenners 22a zu ermitteln. Grundsätzlich kann auf den Drehzahlgeber aber auch verzichtet werden, beispielsweise wenn für den Antrieb ein Motor mit einer festen Drehzahl verwendet wird, wie beispielsweise ein Schrittmotor. Die Steuereinheit aktiviert die entsprechende Absperrdüse 18a, 19a lediglich dann, wenn die Abstrahlrichtung 29a des Brenners 22a und die Hauptausstoßrichtung 27a, 31a der entsprechenden Absperrdüse 18a, 19a sich schneiden, d.h. wenn der Brennstrahl 23a von der Fluidströmung 20a, 21 a der entsprechenden Absperrdüse 18a, 19a abgelenkt werden kann. Die Fluidströmung 20a, 21 a der entsprechenden Absperrdüse 18a, 19a weist dadurch eine Taktung auf, die die Steuereinheit an die Drehzahl des Brenners 22a anpasst. Grundsätzlich kann auf die Taktung der Absperrdüsen 18a, 19a aber auch verzichtet werden.

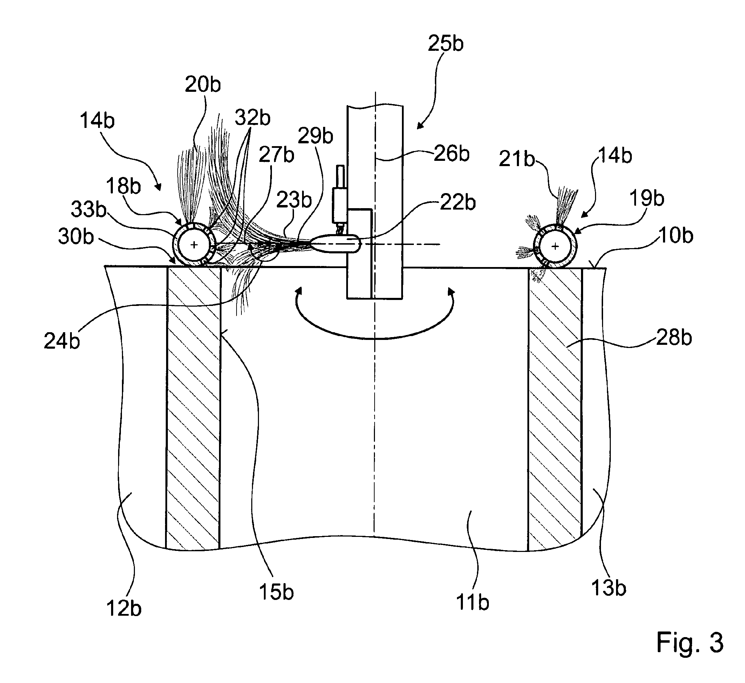

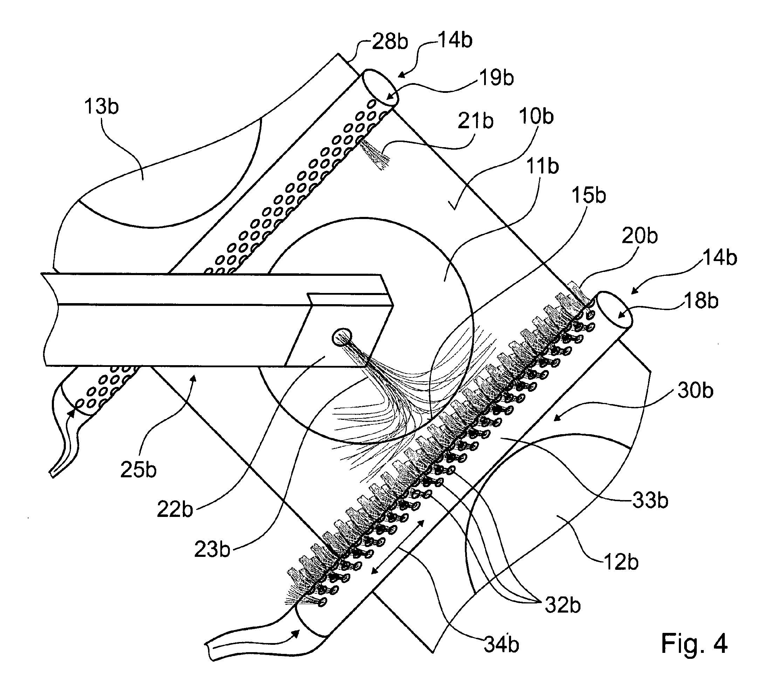

In den Figuren 3 und 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 und 2 verwiesen werden kann. Zur Unterscheidung der Ausführungsbeispiele ist der Buchstabe a in den Bezugszeichen des Ausführungsbeispiels in den Figuren 1 und 2 durch den Buchstaben b in den Bezugszeichen des Ausführungsbeispiels der Figuren 3 und 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 und 2 verwiesen werden.

Die Figuren 3 und 4 zeigen eine weitere Bearbeitungsvorrichtung zur Bearbeitung einer Werkstückoberfläche 10b, insbesondere zur Innenbeschichtung von Zylinderbohrungen 11 b, 12b, 13b in einem Kurbelwellengehäuse einer Brennkraftmaschine mit mehreren in Reihe angeordneten Zylindern. Zur Bearbeitung des Werkstücks 28a umfasst die Bearbeitungsvorrichtung einen Brenner 22b, der dazu vorgesehen ist, gegen die Werkstückoberfläche 10b des Werkstücks 28b gerichtet zu werden. Der Brenner 22b, der analog zu dem vorangegangenen Ausführungsbeispiel ausgebildet ist, umfasst eine Düse, die dazu vorgesehen ist, einen Brennstrahl 23b zu erzeugen, der in einem Betrieb gegen eine Innenwandung der entsprechenden Zylinderbohrung 11 b, 12b, 13b gerichtet ist. Zudem umfasst die Bearbeitungsvorrichtung eine Lagereinheit 25b für den Brenner 22b, die dazu vorgesehen ist, den Brenner 22b um eine Lagerachse 26b zu rotieren, um die gesamte Innenwandung der Zylinderbohrung 11b zu bearbeiten. Analog zu dem vorangegangenen Ausführungsbeispiel bildet die Innenwandung der Zylinderbohrung 11 b, gegen die der Brenner 22b gerichtet ist, einen zur Bearbeitung vorgesehenen Teilbereich 15b der Werkstückoberfläche 10b aus, während die Innenwandungen der benachbart angeordneten Zylinderbohrungen 12b, 13b nicht näher dargestellte Teilbereiche der Werkstückoberfläche 10b ausbilden, die nicht zur Bearbeitung vorgesehen sind.

Die Bearbeitungsvorrichtung umfasst eine Abschirmeinheit 14b, die dazu vorgesehen ist, den zur Bearbeitung vorgesehenen Teilbereich 15b der Werkstückoberfläche 10b und benachbart angeordnete Teilbereiche der Werkstückoberfläche 10b während eines Betriebs voneinander zu trennen. Die Abschirmeinheit 14b weist zwei Absperrdüsen 18b, 19b auf, die dazu vorgesehen sind, eine Fluidströmung 20b, 21 b zur Trennung des Teilbereichs 15b der Zylinderbohrung 11b, der zur Bearbeitung vorgesehen ist, und der nicht näher dargestellten Teilbereiche der benachbart angeordneten Zylinderbohrungen 12b, 13b, die nicht zur zeitgleichen Bearbeitung vorgesehen sind, zu erzeugen. Die Absperrdüsen 18b, 19b sind dazu vorgesehen, eine Fluidströmung 20b, 21 b zu erzeugen, die teilweise entlang der Werkstückoberfläche 10b gerichtet ist. Die Absperrdüsen 18b, 19b sind als Druckluftdüsen ausgebildet.

Im Unterschied zu dem vorangegangenen Ausführungsbeispiel sind die Absperrdüsen 18b, 19b als Mehrkanaldüsen ausgebildet, die eine Vielzahl von Ausströmöffnungen 32b aufweisen. Die Absperrdüsen 18b, 19b erzeugen dadurch ein Druckluftpolster, welches den Brennstrahl 23b des Brenners 22b ablenkt. Die beiden Absperrdüsen 18b, 19b sind identisch ausgebildet.

Die Absperrdüse 18b, entsprechendes gilt auch für die Absperrdüse 19b, umfasst einen Grundkörper 33b, in den die Ausströmöffnungen 32b eingebracht sind. Der Grundkörper 33b weist eine Haupterstreckungsrichtung 34b auf, die senkrecht zu der Lagerachse 26b des Brenners 22b und senkrecht zu einer Abstrahlrichtung 29b des Brenners 22b gerichtet ist. Die Ausströmöffnungen 32b sind in Form von Bohrungen ausgebildet, die in den Grundkörper 33b eingebracht sind. Der Grundkörper 33b weist in dem dargestellten Ausführungsbeispiel einen runden Querschnitt auf. Er ist rohrförmig ausgebildet. Grundsätzlich ist aber auch eine andere Ausgestaltung des Grundkörpers 33b denkbar.

Die in den Grundkörper 33b eingebrachten Ausströmöffnungen 32b sind entlang der Haupterstreckungsrichtung 34b und entlang einer Umfangsrichtung über den Grundkörper 33b verteilt. Entlang der Haupterstreckungsrichtung 34b weist der Grundköper eine Länge auf, die zumindest gleich groß ist wie ein Durchmesser, den die zu bearbeitenden Zylinderbohrungen 11b, 12b, 13b aufweisen. Die Ausströmöffnungen 32b sind in Form einer Matrixanordnung angeordnet, die entlang der Haupterstreckungsrichtung 34b eine Längserstreckung aufweist, die ebenfalls zumindest gleich groß ist wie der Durchmesser der zu bearbeitenden Zylinderbohrungen 11 b, 12b. Senkrecht zu der Haupterstreckungsrichtung 34b sind mehrere Reihen von Ausströmöffnungen 32b übereinander angeordnet. Die Matrixanordnung kann dabei in einer Richtung senkrecht zu der Haupterstreckungsrichtung 34b unterschiedliche Querstreckungen aufweisen. Die Quererstreckung hängt insbesondere von dem verwendeten Brenner 22b und/oder dem Querschnitt des Grundkörpers 33b ab. Weist der Grundkörper 33b wie dargestellte einen runden Querschnitt auf, kann die Matrixanordnung eine andere Quererstreckung aufweisen, wie wenn der Grundkörper 33b einen rechteckigen Querschnitt aufweisen würde.

Die Absperrdüse 18b weist eine durch die Ausströmöffnungen 32b definierte Hauptausstoßrichtung 27b auf, die senkrecht zu der Lagerachse 26b des Brenners 22b gerichtet ist. Die Fluidströmung 20b der Absperrdüse 18b weist dadurch eine mittlere Strömungsrichtung auf, die parallel zu der Hauptausstoßrichtung 27b gerichtet ist. Durch die Quererstreckung in der Matrixanordnungen der Ausströmöffnungen 32b des Grundkörpers 33b weist die Fluidströmung 20b um die Hauptausstoßrichtung 27b eine Aufweitung von zumindest 90 Grad auf. In dem darstellten Ausführungsbeispiel beträgt die Aufweitung ca. 150 Grad.

Zur Abschirmung der nicht zur Bearbeitung vorgesehenen Teilbereiche der Werkstückoberfläche 10b wird die Abschirmdüse 18b zwischen den Zylinderbohrungen 11 b, 12b angeordnet. Durch die starke Aufweitung ist ein Teil der mittels der Absperrdüse 18b erzeugbaren Fluidströmung 20b gegen einen Teilbereich 30b der Werkstückoberfläche 10b gerichtet. Ein weiterer Teil der Fluidströmung 29b ist in dem Teilbereich 30b entlang der Werkstückoberfläche 10b gerichtet. Zudem ist ein Teil der Fluidströmung 20b von der Werkstückoberfläche 10b weg gerichtet. Die Fluidströmung 20b bildet dadurch das Druckluftpolster aus, welches den Brennstrahl 23b des Brenners 22b in einem Betrieb ablenkt. Die Absperrdüse 18b und der Brenner 22b sind dabei in einem Winkel 24b von 180 Grad zueinander angeordnet, d.h. die Hauptausstoßrichtung 27b der Absperrdüse 18b und eine Abstrahlrichtung 29b des Brenners 22b sind antiparallel zueinander orientiert.

Grundsätzlich ist auch eine Ausgestaltung der Absperrdüsen 18b, 19b als Mehrkanaldüsen mit einer Aufweitung kleiner als 90 Grad denkbar. Beispielsweise kann der Grundkörper 33b einen rechteckigen Querschnitt mit einer dem Brenner 22b zugewandten Oberfläche aufweisen, in welcher sämtliche Ausströmöffnungen 32b eingebracht sind. Die Ausströmöffnungen 32b sind in einer solchen Ausstaltung jeweils parallel zueinander ausgerichtet und erzeugen vor der dem Brenner 22b zugewandten Oberfläche ein Druckluftpolster, welches den Brennstrahl 23b ablenkt.

## Patentansprüche

1. Bearbeitungsvorrichtung zur Bearbeitung einer Werkstückoberfläche (10a)in Form einer Innenbeschichtung von mehreren in Reihe angeordneten Zylinderbohrungen (11a, 12a, 13a), mit einer Abschirmeinheit (14a), die dazu vorgesehen ist, einen zur Bearbeitung vorgesehenen Teilbereich (15a) der Werkstückoberfläche (10a) und einen benachbart angeordneten Teilbereich (16a) der Werkstückoberfläche (10a) zumindest während eines Betriebs voneinander zu trennen,
wobei die Abschirmeinheit (14a) wenigstens eine Absperrdüse (18a, 19a) aufweist, die dazu vorgesehen ist, eine Fluidströmung (20a, 21a) zur Trennung der zumindest zwei Teilbereiche (15a, 16a, 17a) zu erzeugen
**dadurch gekennzeichnet, dass**
die Absperrdüse (18a, 19a) so positioniert ist, dass die Fluidströmung (20a, 21 a) entlang der Werkstückoberfläche (10a) strömt und die Absperrdüse (18a, 19a) auf einen Teilbereich (30a) zwischen zwei Zylinderbohrungen (11 a, 12a) gerichtet ist.

2. Bearbeitungsvorrichtung nach Anspruch 1,
**dadurch gekennzeichnet, dass**
die zumindest eine Absperrdüse (18a, 19a) als eine Druckluftdüse ausgebildet ist.

3. Bearbeitungsvorrichtung nach einem der vorhergehenden Ansprüche,
**dadurch gekennzeichnet, dass**
die Absperrdüse (18a, 19a) dazu vorgesehen ist, einen Flachstrahl zu erzeugen.

4. Bearbeitungsvorrichtung nach einem der vorhergehenden Ansprüche,
**gekennzeichnet durch**
einen Brenner (22a) zur Bearbeitung der Werkstückoberfläche (10a).

5. Bearbeitungsvorrichtung nach Anspruch 4,
**dadurch gekennzeichnet, dass**
die mittels der zumindest einen Absperrdüse (18a, 19a) erzeugbare Fluidströmung (20a, 21a) zur Umlenkung eines Brennstrahls (23a) des Brenners (22a) vorgesehen ist.

6. Bearbeitungsvorrichtung nach Anspruch 4 oder 5,
**dadurch gekennzeichnet, dass**
die Absperrdüse (18a) und der Brenner (22a) in einem Winkel (24a) zwischen 80 Grad und 150 Grad zueinander angeordnet sind.

7. Bearbeitungsvorrichtung zumindest nach Anspruch 4,
**dadurch gekennzeichnet, dass**
die Absperrdüse (18a) und der Brenner (22a) in einem Winkel von ca. 180 Grad zueinander angeordnet sind.

8. Bearbeitungsvorrichtung zumindest nach Anspruch 4,
**dadurch gekennzeichnet, dass**
die zumindest eine Absperrdüse (18a, 19a) relativ zu dem Brenner (22a) positionierbar ist.

9. Bearbeitungsvorrichtung zumindest nach Anspruch 4,
**gekennzeichnet durch**
eine zweite Absperrdüse (19a), die dazu vorgesehen ist, in Bezug auf den Brenner (22a) gegenüber der ersten Absperrdüse (18a) angeordnet zu werden.

10. Bearbeitungsvorrichtung zumindest nach Anspruch 4,
**gekennzeichnet durch**
eine Lagereinheit (25a) für den Brenner (22a), die eine Lagerachse (26a) aufweist, die zumindest im Wesentlichen senkrecht zu einer Hauptausstoßrichtung (27a) der zumindest einen Absperrdüse (18a) gerichtet ist.

11. Bearbeitungsvorrichtung nach Anspruch 8,
**gekennzeichnet durch**
eine Steuereinheit zur Ansteuerung der zumindest einen Absperrdüse (18a, 19a), die dazu vorgesehen ist, die Absperrdüse (18a, 19a) in Abhängigkeit von einer Ausrichtung und/oder Position des Brenners (22a) zu aktivieren und/oder zu deaktivieren.

12. Verfahren zur Bearbeitung einer Werkstückoberfläche (10a), in Form einer Innenbeschichtung von mehreren in Reihe angeordneten Zylinderbohrungen (11a, 12a 13a), bei dem ein zur Bearbeitung vorgesehener Teilbereich (15a) der Werkstückoberfläche (10a) und einen benachbart angeordneter Teilbereich (16a) der Werkstückoberfläche (10a) zumindest während eines Betriebs voneinander getrennt werden,
wobei mittels wenigstens einer Absperrdüse (18a, 19a; 18b, 19b) eine Fluidströmung (20a, 21 a; 20b, 21 b) zur Trennung der zumindest zwei Teilbereiche (15a, 16a, 17a; 15b) erzeugt wird und die Absperrdüse (18a, 19a) so positioniert wird, dass die Fluidströmung (20a, 21 a) entlang der Werkstückoberfläche (10a) strömt und die Absperrdüse (18a, 19a) auf einen Teilbereich (30a) zwischen zwei Zylinderbohrungen (11a, 12a) gerichtet ist.

## Claims

1. A processing apparatus for processing a workpiece surface (10a) in form of an internal coating of cylinder bores (11a, 12a, 13a) which are arranged in a row, having a shield unit (14a) which is provided to separate from one another - at least during operation - a part region (15a) of the workpiece surface (10a) provided for the processing and an adjacently arranged part region (16a, 17a) of the workpiece surface (10a), whereby the shield unit (14a) has at least one blocking nozzle (18a, 19a) which is provided to generate a fluid flow (20a, 21a) for separating the at least two part regions (15a, 16a; 17a)
**characterized in that**
the blocking nozzle (18a, 19a) is positioned such that the fluid flow (20a, 21a) flows along the workpiece surface (10a) and the blocking nozzle (18a, 19a) is directed to the part region (30a) between two cylinder bores (11a, 12a).

2. A processing apparatus in accordance with claim 1,
**characterized in that**
the at least one blocking nozzle (18a, 19a) is configured as a compressed air nozzle.

3. A processing apparatus in accordance with any one of the preceding claims,
**characterized in that**
the blocking nozzle (18a, 19a) is provided to generate a flat jet.

4. A processing apparatus in accordance with any one of the preceding claims,
**characterized by**
a torch (22a) for processing the workpiece surface (10a).

5. A processing apparatus in accordance with claim 4,
**characterized in that**
the fluid flow (20a, 21a) which can be generated by means of the at least one blocking nozzle (18a, 19a) is provided for deflecting a torch jet (23a) of the torch (22a).

6. A processing apparatus in accordance with claim 4 or claim 5,
**characterized in that**
the blocking nozzle (18a) and the torch (22a) are arranged at angle (24a) toward one another between 80 degrees and 150 degrees.

7. A processing apparatus at least in accordance with claim 4,
**characterized in that**
the blocking nozzle (18a) and the torch (22a) are arranged at angle toward one another of approximately 180 degrees.

8. A processing apparatus at least in accordance with claim 4,
**characterized in that**
the at least one blocking nozzle (18a, 19a) can be positioned relative to the torch (22a).

9. A processing apparatus at least in accordance with claim 4,
**characterized by**
a second blocking nozzle (19a) which is provided to be arranged opposite the first blocking nozzle (18a) with respect to the torch 22a).

10. A processing apparatus at least in accordance with claim 4,
**characterized by**
a support unit (25a) for the torch (22a) which has a support axis (26a) which is directed at least substantially perpendicular to a main expulsion direction (27a) of the at least one blocking nozzle (18a).

11. A processing apparatus in accordance with claim 8,
**characterized by**
a control unit for controlling the at least one blocking nozzle (18a, 19a) which is provided to activate and/or to deactivate the blocking nozzle (18a, 19a) in dependence on an alignment and/or a position of the torch (22a).

12. A method of processing a workpiece surface (10a) in form of an internal coating of cylinder bores (11a, 12a, 13a) which are arranged in a row, wherein a part region (15a) of the workpiece surface (10a) provided for the processing and an adjacently arranged part region (16a, 17a) of the workpiece surface (10a) are separated from one another at least during operation ,whereby a fluid flow (20a, 21a) for separating the at least two part regions (15a, 16a, 17a) is generated by at least one blocking nozzle (18a, 19a)
**characterized in that**
the blocking nozzle (18a, 19a) is positioned such that the fluid flow (20a, 21a) flows along the workpiece surface (10a) and the blocking nozzle (18a, 19a) is directed to the part region (30a) between two cylinder bores (11a, 12a).

## Revendications

1. Dispositif de traitement destiné à traiter une surface de pièce (10a) sous la forme d'un revêtement intérieur de plusieurs alésages de cylindre (11a, 12a, 13a) agencés en ligne, avec une unité d'écrantage (14a) qui est prévue pour séparer une zone (15a) de la surface de pièce (10a) destinée à être traitée, d'une zone adjacente (16a) de la surface de pièce (10a) au moins pendant un fonctionnement,
où l'unité d'écrantage (14a) comprend au moins une buse de barrage (18a, 19a) qui est destinée à engendrer un flux de fluide (20a, 21a) pour la séparation des au moins deux zones (15a, 16a, 17a),
**caractérisé en ce que** la buse de barrage (18a, 19a) est positionnée de façon que le flux de fluide (20a, 21a) passe le long de la surface de pièce (10a) et que la buse de barrage (18a, 19a) soit dirigée sur une zone (30a) entre deux alésages de cylindre (11a, 12a).

2. Dispositif de traitement selon la revendication 1, **caractérisé en ce que** l'au moins une buse de barrage (18a, 19a) est formée comme buse à air comprimé.

3. Dispositif de traitement selon l'une des revendications précédentes, **caractérisé en ce que** la buse de barrage (18a, 19a) est prévue pour engendrer un jet plat.

4. Dispositif de traitement selon l'une des revendications précédentes, **caractérisé par** un brûleur (22a) pour le traitement de la surface de pièce (10a).

5. Dispositif de traitement selon la revendication 4, **caractérisé en ce que** le flux de fluide (20a, 21a) pouvant être engendré à l'aide de l'au moins une buse de barrage (18a, 19a) est prévu pour une déviation d'un jet de flamme (23a) du brûleur (22a).

6. Dispositif de traitement selon la revendication 4 ou 5, **caractérisé en ce que** la buse de barrage (18a) et le brûleur (22a) sont disposés l'un par rapport à l'autre sous un angle (24a) entre 80 degrés et 150 degrés.

7. Dispositif de traitement au moins selon la revendication 4, **caractérisé en ce que** la buse de barrage (18a) et le brûleur (22a) sont disposés l'un par rapport à l'autre sous un angle d'environ 180 degrés.

8. Dispositif de traitement au moins selon la revendication 4, **caractérisé en ce que** l'au moins une buse de barrage (18a, 19a) est apte à être positionnée par rapport au brûleur (22a).

9. Dispositif de traitement au moins selon la revendication 4, **caractérisé par** une seconde buse de barrage (19a) qui est prévue à être disposée, par rapport au brûleur (22a), en regard de la première buse de barrage (18a).

10. Dispositif de traitement au moins selon la revendication 4, **caractérisé par** une unité de palier (25a) pour le brûleur (22a), qui comprend un axe de palier (26a) orienté au moins sensiblement perpendiculairement à une direction principale de jet (27a) de l'au moins une buse de barrage (18a).

11. Dispositif de traitement selon la revendication 8, **caractérisé par** une unité de commande pour asservir l'au moins une buse de barrage (18a, 19a), qui est destinée à activer et/ou à désactiver la buse de barrage (18a, 19a) en fonction d'une orientation et/ou d'une position du brûleur (22a).

12. Procédé pour le traitement d'une surface de pièce (10a) sous la forme d'un revêtement intérieur de plusieurs alésages de cylindre (11a, 12a, 13a) agencés en ligne, où une zone (15a) de la surface de pièce (10a) destinée à être traitée et une zone adjacente (16a) de la surface de pièce (10a) sont séparées l'une de l'autre au moins pendant un fonctionnement,
où, à l'aide d'au moins une buse de barrage (18a, 19a ; 18b, 19b), un flux de fluide (20a, 21a ; 20b, 21b) est engendré pour la séparation des au moins deux zones (15a, 16a, 17a ; 15b) et où la buse de barrage (18a, 19a) est positionnée de façon que le flux de fluide (20a, 21a) passe le long de la surface de pièce (10a) et que la buse de barrage (18a, 19a) soit dirigée sur une zone (30a) entre deux alésages de cylindre (11a, 12a).
